# EUROPEAN PATENT APPLICATION

(11) **EP 1 452 269 A1**
(43) Date of publication of application: **01.09.2004**
(21) Application number: 03425117.3
(22) Date of filing: 25.02.2003
(51) Int. Cl.: B23Q 39/02, B23Q 1/50, B23Q 1/54

(54) **Toolhead for machine tools or work centers and machine comprising said head**

(71) Applicant: BACCI PAOLINO DI BACCI AGOSTINO, 56021 Cascina, Pisa (IT)
(72) Inventor: Ruggieri, Alberto, 56025 Pontedera, Pisa (IT)
(74) Representative: Mannucci, Michele

(57) **Abstract**

A toolhead, comprising a plurality of chucks (23, 33) for corresponding machining tools (U), provided with a numerically controlled rotating or oscillating movement (B). The chucks are divided into at least two assemblies (21, 31) of chucks (23, 33), movable independently from each other around a first and a second numerically controlled axis of rotation or oscillation (B1, B2) independent from each other.

## Description

### Technical field

The present invention relates to a toolhead for a numerically controlled machine or work center. In particular, although not exclusively, the invention relates to a so-called double-rotating head, that is able to perform rotating or oscillating movements around two numerically controlled axes, generally perpendicular to each other.

The invention also relates to a machine tool or work center comprising a type of head of this type. Within the scope of the present description and of the attached claims the terms machine tool and work center are utilized as synonyms.

More specifically, the invention relates to toolheads and relative machine tools or work centers intended in particular for the machining of wood.

### State of the art

In the field of machine tools, in particular those dedicated to machining wood, numerically controlled machine tools or work centers are known comprising a toolhead equipped with one or more chucks which may move around two numerically controlled axes of oscillation or rotation. Examples of machines or work centers of this type are described in EP-A-0744244, EP-A-0873317 and EP-A-1002620. These machines may have an upright along which a slide carrying the double-rotating head translates vertically, or in some cases a portal structure, with two uprights and a horizontal crosspiece, along which the slide supporting the double-rotating head translates. Typically, the double-rotating head carries four chucks in a cross arrangement, or in certain cases two chucks positioned opposite each other, with aligned axes.

Machine tools of this type today require ever-increasing characteristics of flexibility and machining speed. The use of double-rotating heads with a large number of chucks makes it possible to have numerous tools available to machine a single workpiece. However, having for example four chucks and four corresponding tools in a cross arrangement sets some limits and causes some drawbacks, especially in machines with a portal structure. In particular, there may be collisions between tools and the supporting structure of the workpieces being machined. Moreover, there are greater risks of collisions between tools not being utilized and the workpiece being machined.

### Objects and summary of the invention

The object of the present invention is to produce a head and a machine tool employing said head which overcome the drawbacks and limits of traditional heads and relative machines or work centers.

This and other objects and advantages, which shall be apparent to those skilled in the art by reading the text hereunder, are attained substantially with a toolhead comprising a plurality of chucks for corresponding machining tools, provided with a numerically controlled rotating or oscillating movement, characterized in that said chucks are divided into at least two assemblies, which move independently from each other around a first and a second numerically controlled axis of rotation or oscillation independent from each other.

With a layout of this type it is possible to equip the toolhead with a large number of tools. In fact, while in normal toolheads the maximum number of tools is four (except in particularly complex and cumbersome arrangements, of star-shaped chucks), with a cross arrangement, the double-rotating head according to the invention may even comprise double the number of chucks and therefore of tools. This allows, without an automatic tool loader and a tool magazine being required, numerous and different machining operations to be performed on the same workpiece, increasing productivity.

However, at least one of the two assemblies of tools may also comprise a limited number of chucks, for example even a single chuck. In this case advantages in terms of machining flexibility are, in any case, obtained. By reducing the number of chucks in each assembly, for example to two or three, with consequent reduction in the tools available, there is also the advantage of reducing or totally eliminating the risks of collision between the workpiece being machined and the tools temporarily not being utilized. In substance, by dividing the chucks into assemblies movable around respective numerically controlled axes independent from each other, it is possible to have a large number of tools, moreover positioning these so that when one of them is machining the workpiece, the others do not knock the workpiece, parts of the machine structure or the equipment for mounting and clamping the workpiece being machined.

Advantageously and preferably the head is of the double-rotating type, that is it has a third numerically controlled axis of rotation or oscillation. The movement of the two assemblies of tools around this third axis is simultaneous, as it is a numerically controlled axis common to the two assemblies of tools.

According to a possible embodiment of the invention, the toolhead comprises a support - preferably oscillating or rotating around the third axis of rotation or oscillation, when present - which carries the two chuck assemblies, in turn rotating or oscillating in relation to the support around said first and second numerically controlled axes.

Although it is possible to provide a single arm or beam, mounted projectingly in relation to the support, which carries the two chuck assemblies on opposite sides, according to a preferred embodiment of the invention each of the two chuck assemblies is supported by a respective arm anchored to the support. This allows greater flexibility and reduces problems of interference between chucks and relative tools on one side and workpieces being machined and relative clamping or supporting means on the other. Preferably, the two arms, which advantageously may be parallel to each other, carry the respective chuck assemblies facing each other. The configuration of the head will therefore be a U or C, with the two chuck assemblies arranged inside the U or the C. It is also possible to arrange the chuck assemblies on the outside of the U or C structure formed by the support and by the arms.

The two supporting arms of the two chuck assemblies may be mounted fixed on the support, in which case the two chuck assemblies are at a fixed distance from each other. Nonetheless, according to a preferred embodiment of the invention, the distance between the arms may be modified. For this purpose at least one of the two arms must be movable in relation to the support. The reciprocal distance between the two arms may be adjusted manually from time to time providing alternative clamping positions of the arm(s) movable in relation to the support. Preferably, nonetheless, the arms (or at least one of them) are movable along guides integral with the support, so that is possible to adjust the reciprocal distance of the chuck assemblies in any position and without discontinuity.

Also in this case the distance may be adjusted manually. However, according to a possible and advantageous embodiment, actuators are preferably provided to allow this position to be adjusted automatically, even during the machine cycle according to the positioning requirements of the tools. In this case a further numerically controlled axis may be provided for relative movement of one arm in relation to the other, although for reasons of simplicity and economy more simple operation is preferable, as precise modification of the reciprocal distance between the chuck assemblies is not required, two or more reciprocal alternative positions being sufficient.

The possibility of modifying the reciprocal position of the two chuck assemblies moreover, makes it possible to prevent collisions between chucks and tools on the one side and workpieces'being machined on the other.

As shall be apparent from the description of some embodiments with reference to the attached figures, to attain specific advantages, in particular in relation to the movability of chucks in relation to the workpiece being machined, in a particularly advantageous embodiment of the invention at least a first of said two chuck assemblies has a number of chucks equal to or less than three. These three chucks are arranged so as to leave a wide zone free around the axis of rotation or oscillation of the chuck assembly. For example and in particular the axes of the chucks may be arranged to form an area with an angular aperture of 180° without obstructions. This configuration is particularly advantageous, especially in machine tools with a portal structure.

In an advantageous configuration, the first chuck assembly comprises three chucks and the second chuck assembly comprises four chucks. This configuration is a compromise between the need for a high number of chucks and thus tools and to prevent collisions with workpieces being machined or with parts of the machine structure, also comprising the mechanical components required to support and clamp workpieces. When it is sufficient to provide a smaller number of tools mounted simultaneously on the machine, each chuck assembly may carry only two chucks or three chucks.

Further advantageous features and embodiments of the head and of the machine tool according to the invention are indicated in the attached dependent claims.

### Brief description of the drawings

The invention shall now be better understood according to the description and attached drawing, which shows non-limiting practical embodiments of the invention. More specifically, in the drawing:
Fig. 1 shows a side view of a work center or machine tool according to the invention, in a first embodiment;
Figs. 1A and 1 B show two detail views according to the lines IA-IA and IB-IB of Fig.1, respectively;
Fig. 2 shows a front view according to II-II in Fig.1;
Fig. 3 shows a front view of a machine tool or work center with a portal structure produced according to the invention;
Fig. 4 shows a view and part section according to the line IV-IV in Fig.3;
Fig. 5 shows a detail of a double-rotating toolhead according to the invention, in a modified embodiment in relation to the one shown in the preceding figures;
Figs. 6 and 7 show in two different layouts a further embodiment of a toolhead according to the invention;
Fig.8 shows an analogous embodiment to the embodiment in Fig.4, but in which each chuck assembly has only two coaxial chucks;
Figs.9 and 10 show an embodiment analogous to the one in Figs.6 and 7 with two chucks in each assembly;
Figs.11 and 12 schematically show the advantage of a head produced according to Fig.8 or 9, compared with a head carrying a cross arrangement with four chucks;
Fig.13 shows a possible machining process performed with a head in Fig.8 or 9, in a machine with a portal structure;
Figs.14A and 14B show a comparison between a portal machine equipped with a double-rotating head with chucks with a cross arrangement according to prior art and a machine with an analogous structure equipped with a double-rotating head of the type shown in Fig.8 or 9;
Figs.15A and 15B show a comparison analogous to the one in Figs. 14A and 14B with a traditional double-rotating head with chucks in a cross arrangement and a double-rotating head according to the invention with the chucks arranged in an L;
Fig.16 schematically shows simultaneous machining of two workpieces attained with a head according to the invention;
Fig.17 shows a machine with an open bridge structure equipped with a head according to the invention; and
Figs.18 and 19 respectively show a front view and a side view according to XIX-XIX in Fig.18 of a further configuration of a machine with portal structure and head according to the present invention.

### Detailed description of the preferred embodiments of the invention

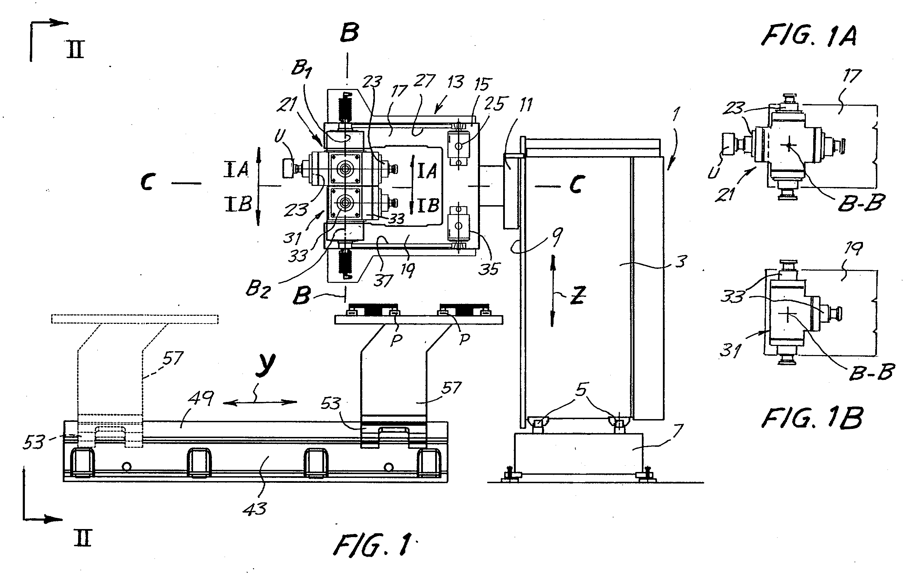

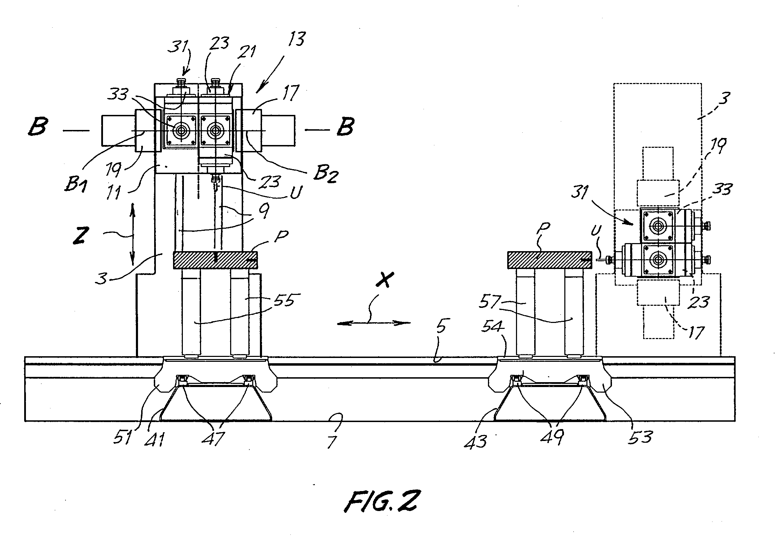

Figs. 1, 1 A, 1 B and 2 show a first possible configuration of a machine tool mounting a double-rotating toolhead according to the invention. In this embodiment the machine tool, indicated as a whole with 1, has a structure with a vertical upright 3 sliding along a pair of guides 5 carried by a first bed 7 which extends according to a direction X. This direction also represents the numerically controlled axis along which the upright 3 moves to perform one of the numerically controlled movements with which the machine is provided.

Extending along the upright 3, in a vertical direction (Z), are guides 9, along which a slide 11 runs. The slide 11 supports a double-rotating toolhead indicated as a whole with 13. The double-rotating head 13 is provided with a numerically controlled rotating movement around a horizontal axis C, orthogonal to the axis X. It has a U or C structure, with a main support 15 from which two arms 17 and 19 extend projectingly parallel to the axis C. The unit formed by the support 15 and the arms 17, 19 rotates integrally around the axis of rotation C.

The arm 17 supports a first chuck assembly 23, indicated as a whole with 21 which comprises, in the example shown (as can be seen in particular in Fig. 1A), four chucks 23 with a cross arrangement. Each chuck may carry its own tool. To simplify the illustration in Fig. 1 a single tool U is shown mounted on one of the four chucks 23 of the assembly 21. The assembly 21 of chucks 23 may rotate around a numerically controlled axis of rotation B1. The axis of rotation B1 is orthogonal to the axis of rotation C and (in the position shown in Fig.1) has a vertical direction. Rotation of the assembly 21 of chucks 23 around the axis of rotation B1 is imparted by an actuator 25, for example a brushless motor, by means of a toothed belt 27 or any other suitable mechanical drive component.

Analogously to the arm 17, the arm 19 supports a second chuck assembly indicated as a whole with 31. This second chuck assembly (as can be seen in particular in the view in Fig. IB-IB) comprises three chucks 33 arranged with their axes positioned at 90° in relation to one another. An actuator 35, analogous to the actuator 25, controls the rotating movement of the assembly 21 of chucks 33 around a second numerically, controlled axis of rotation indicated with B2. Also in this case the movement is transmitted by a flexible component, such as a belt 37 or the like. The two numerically controlled axes B1 and B2 are geometrically coincident with each other, that is the two chuck assemblies have the same geometric axis of rotation, indicated in the drawings with B-B. This layout is optimum for various reasons, which shall be apparent with reference to the characteristics and peculiarities of this double-rotating head. However, the numerically controlled axes B1 and B2 of rotation may also be positioned parallel to each other, but staggered. In this case the two chuck assemblies 21, 31 rotate around axes that are geometrically parallel but staggered rather than around a common geometric axis. The two numerically controlled axes B1 and B2 may also not be parallel with each other. In this case the two tool assemblies 21, 23 rotate around convergent or divergent geometric axes.

As the two axes numerically controlled axes of rotation B1 and B2 are independent from each other, the two chuck assemblies 21 and 31 rotate or oscillate around their respective axes B1 and B2 independently from each other, controlled by the two independent actuators 25 and 35.

Positioned in front of the bed 7 are two bases 41 and 43, parallel with each other and orthogonal to the bed 7 itself. Corresponding guides 47 and 49 extend along the bases 41 and 43, in a horizontal direction Y orthogonal to the direction X. A carriage or slide 51 runs on the guides 47, provided with a numerically controlled movement along the numerically controlled axis Y. Analogously, a carriage or slide 53 analogous to the carriage or slide 51 may travel along the guides 49 with a numerically controlled movement along the corresponding numerically controlled axis Y. Fig. 1 shows, with a solid line and a dashed line, two end positions which may be adopted by the carriage 53 movable along the guides 49. The carriages 51 and 53 carry the supporting and clamping means, generically and schematically indicated with 55 and 57, to support and clamp the workpieces to be machined, indicated summarily with P. In the example shown the supporting means 55 and 57 have distances between centers that can be varied by providing specific guides 52 and 54 on the slides or carriages 51 and 53 respectively. This allows the surface on which workpieces are supported, composed of means 55 and 57, to be adapted to the dimension and shapes of the workpieces.

The head 13, rotating around the axis C, allows the various tools mounted on the chucks 21 and 31 to be taken to the operating position. By providing a number of chucks of less than four for the assembly 31 of chucks 33, it is possible (while maintaining the advantage of an overall high number of chucks on the head 13), simply and without specific relative movements between workpiece being machined and the toolhead, to prevent collision between the workpiece being machined and tools which are not being utilized. For example, in the layout shown with the solid line in Fig. 2 the chuck 23 facing downward and belonging to the chuck assembly 21 may easily machine any point on the workpiece below it being machined without interference between said workpiece and the chucks 33 of the adjacent chuck assembly 31. This is possible as the second chuck assembly has been positioned so that none of the tools carried by the three chucks 33 are facing the workpiece being machined.

The machine described hereinbefore is substantial provided with six numerically controlled axes: two axes of oscillation or rotation B1, B2, one for each chuck assembly 21, 31; one axis of oscillation or rotation C and three axes of translation X, Y, Z. The presence of two slides or carriages 51 and 53, which may translate along double axis Y, allows the machine to work in an oscillating cycle, that is to carry one of the two slides with the workpiece(s) to the machining position, in the operating area of the toolhead 13 and the other to a loading and unloading position, far from the machining area of the toolhead 13.

Fig. 2 shows, with a dashed line and a solid line, two different machining positions of the upright 3. In the position shown with the solid line the upright machines workpieces carried by the slide 51, while in the alternative position shown with the dashed line, workpieces carried by the slide 53 are machined.

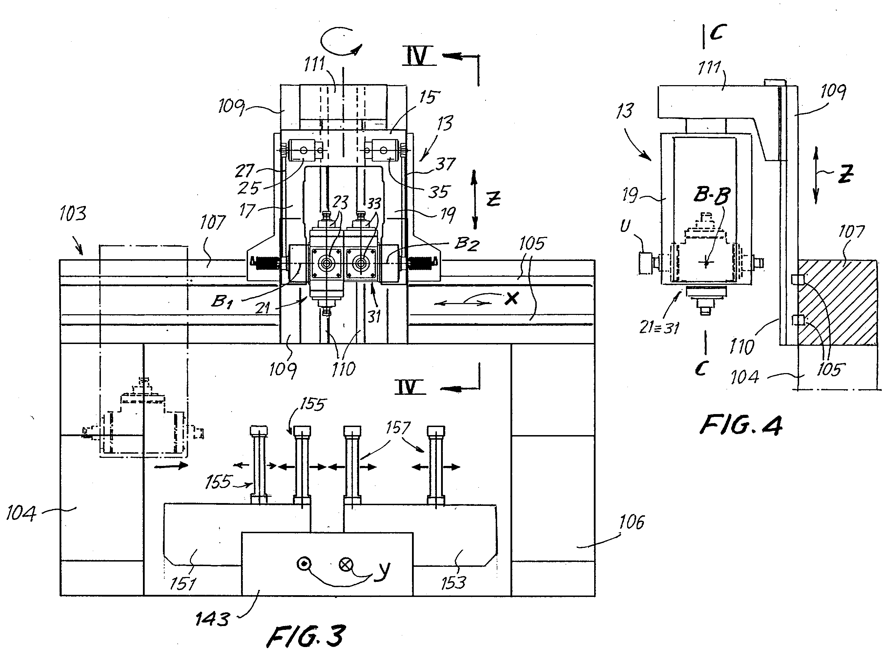

Figs. 3 and 4 show an application of the invention to a machine tool or work center with a portal structure, rather than with a vertical upright, to support the toolhead. In this case the machine, indicated as a whole with 101, has a portal structure 103 comprising two vertical uprights 104, which support a crosspiece 107. Two guides 105 extend along the crosspiece 107 in a horizontal direction X, which also represents the first numerically controlled axis of translation. A carriage or slide 39 equipped with vertical guides 110 translates along the guides 105. A slide 111 carrying a toolhead, again indicated as a whole with 13, translates along the vertical guides 110 according to a vertical direction Z (which represents a numerically controlled axis of vertical translation). The same parts shown in the example of embodiment in Figs. 1 and 2 and indicated with the same reference numbers, not described again here, are mounted on the toolhead 13.

In the example illustrated, a bed 143 extends below the portal structure 103, along which two carriages or slides 151 and 153 run respectively. Alternatively, a single carriage or slide may be provided. The bed 143 extends in a direction orthogonal to the plane in Fig.3, which coincides with the direction of a second numerically controlled axis of horizontal translation, indicated with Y. Respective means 155 and 157 are mounted on the slides or carriages 151 and 153 to support and clamp the workpieces to be machined, not shown. Also in this case the supporting means 155 and 157 can be adjusted in order to define surfaces to support and clamp workpieces of variable dimensions, as a function of the dimensional and morphological characteristics of said workpieces. When the workpieces are clamped using the means 155 and 157 on the carriages 151 and 153, the workpieces and the toolhead can move in relation to each other according to three numerically controlled axes of translation X, Y and Z, just as in the previous example. Also in this case the use of two slides or carriages 151 and 153 allows the machine tool to machine in an oscillating cycle, that is to position and machine a workpiece or a series of workpieces by means of the slide 151, which is positioned under the toolhead 13, while the other slide or carriage 153 is transferred to a loading and unloading area, far from the area of operating of the toolhead 13. In addition to the numerically controlled movement along the three axes of horizontal and vertical translation X, Y, Z are the numerically controlled movements of oscillation or rotation around the numerically controlled axes of rotation B1, B2 and C which the toolhead 13 is provided with.

When the machine tool has the structure shown in Figs. 3 and 4, in order to avoid some drawbacks intrinsic to the machines with portal structure, it is advantageous to provide each of the two chuck assemblies 21 and 31 with two or three chucks rather than four. In fact, in this way the toolhead 13 may be taken to the position shown with the dashed line in Fig.3, to machine (with a chuck arranged with a horizontal axis) a side of a workpiece clamped on the means 155, without any chuck facing downward with its tool projecting beyond the part being machined.

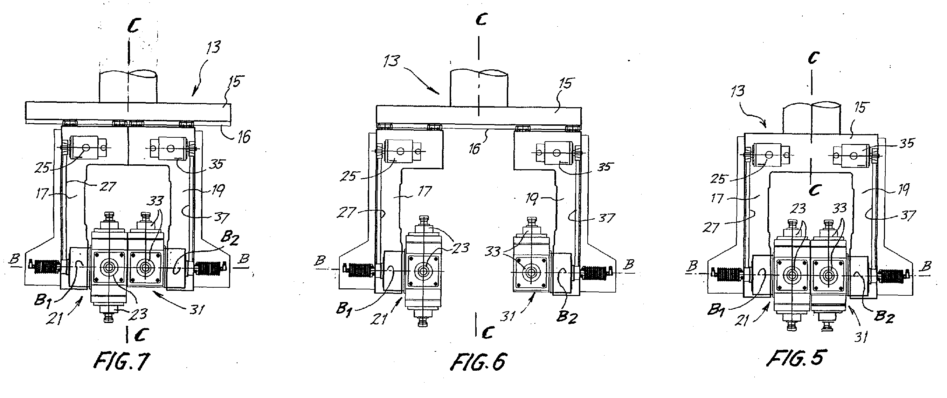

The toolhead 13 may also be designed differently to the illustration in Figs. 1 to 4. For example, Fig.5 shows a toolhead, again indicated with 13, in which each chuck assembly has four chucks in a cross arrangement. Equivalent numbers indicate parts equivalent or corresponding to those of the toolheads 13 shown in the previous figures. While a toolhead with this arrangement may have a few additional difficulties concerning the risk of collision between tools and the workpiece being machined, it makes it possible to provide a larger number of tools on the machine.

Figs. 6 and 7 show a different embodiment of the toolhead 13, which may be utilized alternatively to the previously illustrated embodiments. Equivalent numbers indicate parts equivalent or corresponding to those in the previous embodiments. The main difference between the embodiment in Figs. 6 and 7 and the previously described embodiments lies in the fact that the arms 17 and 19 are not fixedly mounted on the support 15, but may slide along guides 16 orthogonal to the axis of rotation C and to the main direction of the arms 17, 19. The movement along the guides 16 may be manual or motorized, obtained for example by means of a threaded bar and nut screw mechanism and an actuator, not shown. Whatever the method used to adjust or modify the distance between the arms 17 and 19, this configuration allows variation of the distance between the chuck assemblies 21 and 31, to adopt one or other of the reciprocal positions shown in Figs. 6 and 7 or any intermediate position.

In practice, the possibility of adjusting this distance with an actuator, during the machining cycle of the machine, makes it possible to move the arms 17 and 19 in relation to each other as a function of the machining cycle requirements, for example even to move one or other of the two chuck assemblies 21 and 31 and relative tools to a position that prevents collision with the workpiece being machined.

The movement of the arms 17 and 19 along the support 15 may also be controlled by two independent actuators. In this case, the arms 17 and 19 may also adopt positions that are not symmetrical with the axis of oscillation or rotation C. Alternatively, one of the two arms, 17 or 19, may be fixed in relation to the support 15 and the distance between the arms may be modified by translating only one of the arms in relation to the other.

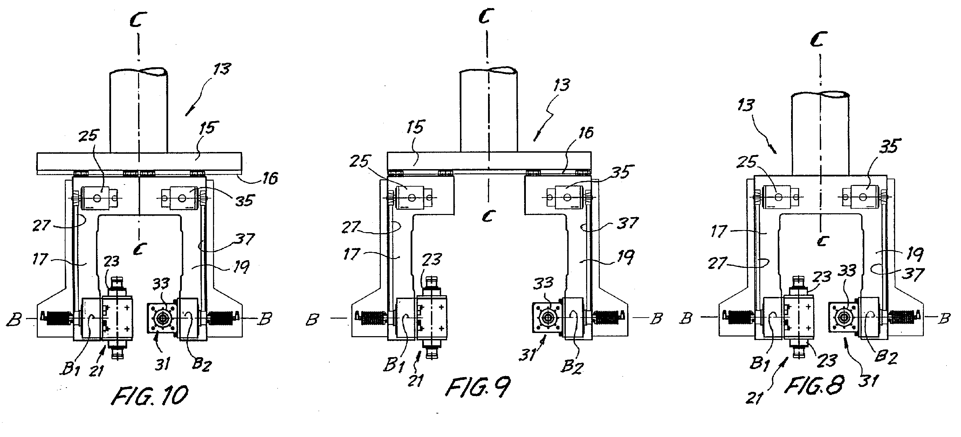

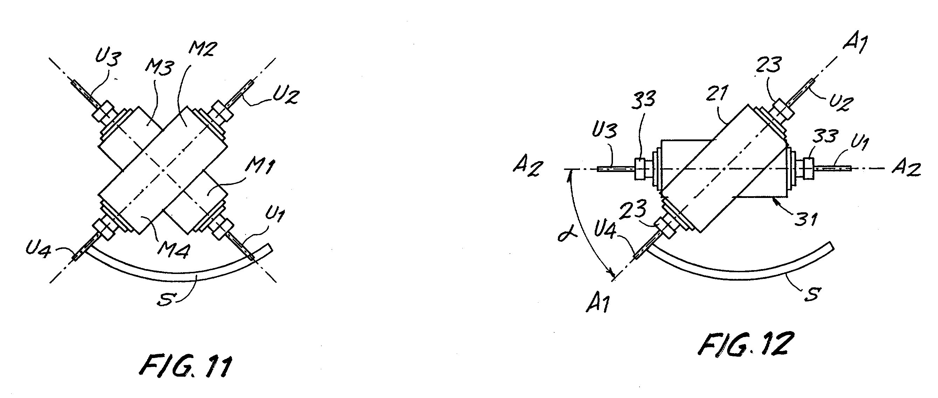

In the examples in Figs. 5, 6 and 7 the chuck assembly 21 has four chucks 23, while the assembly 31 has three chucks 33. It should however be understood that also in this embodiment both the assemblies 21 and 31 may have any number of chucks and therefore of tools. For example, in Fig. 8 (where equivalent numbers indicate parts equivalent or corresponding to those in Fig. 5), each chuck assembly 21, 31 comprises two coaxial chucks, indicated with 23 and 33 respectively. Figs. 9 and 10 show a double-rotating head of a type analogous to the one shown in Figs. 6 and 7, where each chuck assembly 21, 31 again has two coaxial chucks.

Figs. 11 and 12 schematically show the advantage attained from the arrangement of two chuck assemblies each with two coaxial chucks, as is the case for the double-rotating head in Figs. 8 to 10. Figs. 11 and 12 only show the chucks and their respective tools, while the structure of the head is omitted to simplify the drawing. Fig. 11 shows the machining of a backrest S of a chair by means of a traditional toolhead equipped with four chucks in a cross arrangement, indicated with M1-M4, on which four tools U1-U4 are fitted. When the tool U4 is operating and performs, for example, contouring of the workpiece, the tool U1 risks collision with the workpiece being machined. Fig. 12 shows the same machining performed on a workpiece S with the same shape, by means of a toolhead of the type shown in Fig. 8 or of the type shown in Figs. 9 and 10. While the tool U4 coupled on one of the chucks 33 of the chuck assembly 31 is operating, the common axis of the two chucks 23 of the chuck assembly 21 may be rotated so that it is not positioned at 90° in relation to the axis of the chucks 33, so that the tool U1 does not collide with the workpiece being machined S. The angle α between the two axes A1, A2 of the chuck assemblies may vary during machining thanks to the independent numeric control on the two axes of rotation B1, B2.

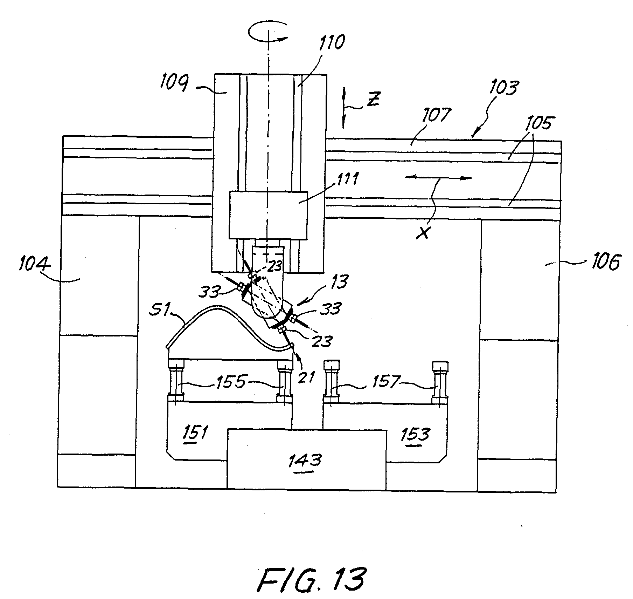

Fig. 13 shows a portal machine tool or work center of the type shown in Fig. 3. Equivalent numbers indicated parts equivalent or corresponding to those in Fig. 3. The double-rotating toolhead is shown rotated by 90° around the axis C in relation to the position adopted in Fig. 3. Moreover, it is equipped in this case with two assemblies, each with two chucks, that is of the type shown in Fig.8 or in Figs. 9 and 10. Positioned on the carriage 151 on the left in the figure is a body S1 of a chair, clamped on a template SA in turn mounted on clamping means 155. The axes along which the chucks 23 and 33 of the chuck assemblies are aligned are inclined by an angle of less than 90°, which may be varied during machining of the workpiece, to prevent tools not being utilized from colliding with the workpiece or with the machine structure.

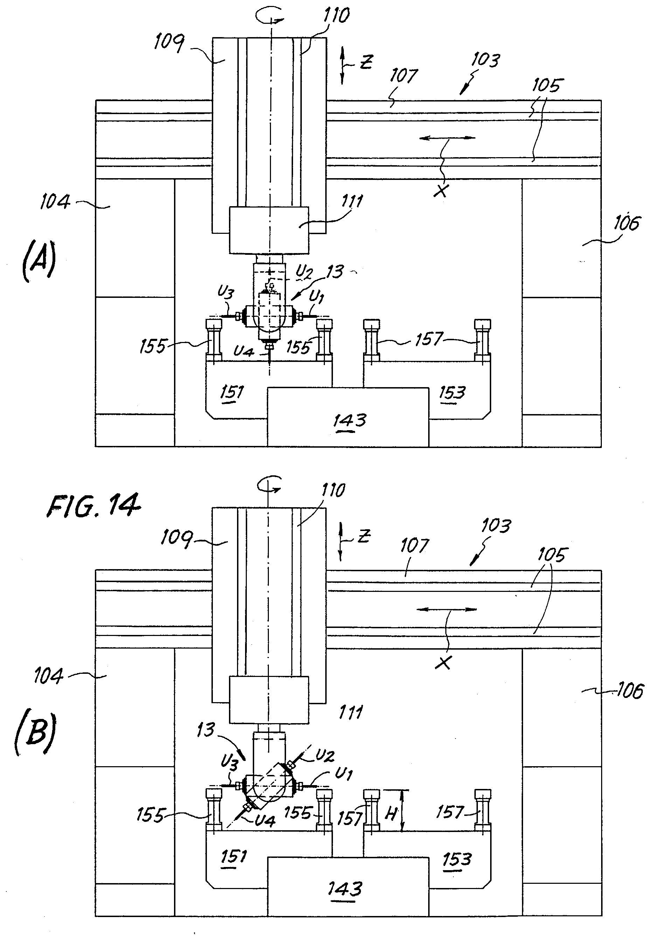

Figs. 14A and 14B show a machine with portal structure analogous to the one in Fig.13. In Fig. 14A it is equipped with a double-rotating toolhead with four tools in a cross arrangement, while in Fig.14B it is provided with a double-rotating head of the type in Fig.8 or 9, 10. In the situation in Fig.14A there is the risk of collision between the tool U4 (not operating) and the carriage 151, while the tools U1 and U3 are operating. With the solution in Fig.14B the risk of collision is prevented, while having the same number of tools available.

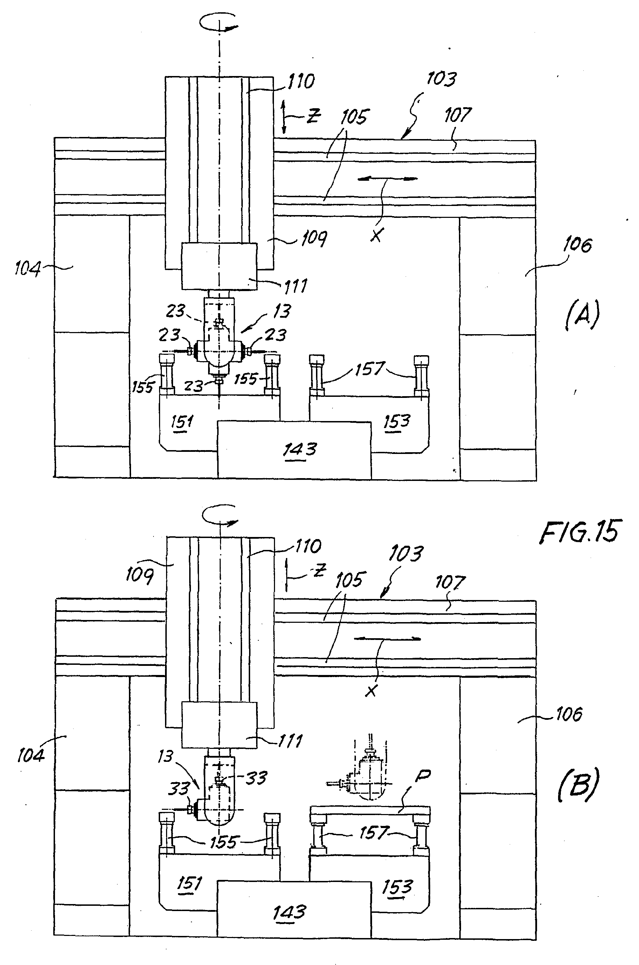

Figs. 15A and 15B show how the same advantage can be attained with a structure of the toolhead in which the two chucks of each assembly are arranged in an L, with the axes at 90° rather than coaxial. On the carriage on the right in Fig. 15B a layout is shown in which the traditional configuration in Fig. 15A would make it impossible to perform machining except with the use of an angle drive fitted to the chuck.

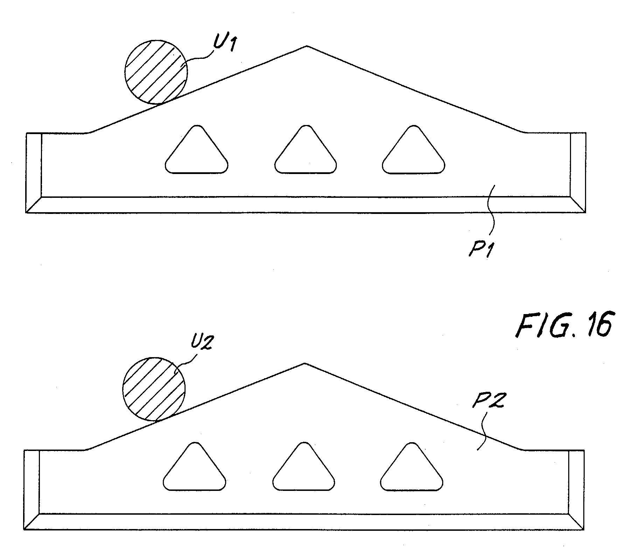

In particular, when the toolhead is produced according to Figs.9 and 10, it may perform parallel machining processes on several equivalent workpieces with a single control of the movements along the controlled axes X, Y, Z, C. Fig.16 schematically shows a possible machining of this type. P1 and P2 indicate two identical workpieces and U1 and U2 two identical tools which simultaneously perform the same machining on the two workpieces. The two tools U1, U2 belong to two different chuck assemblies 21, 31 of the same toolhead.

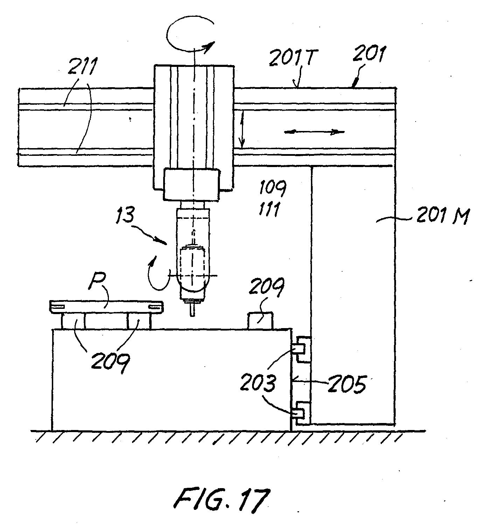

Fig. 17 shows a machine tool with a half-portal or open bridge structure. The machine has an open L-shaped structure, indicated with 201 movable along guides 203 integral with a bed 205. Arranged on the bed are clamping means constituted in the example shown by so-called supporting blocks 209 for the workpieces P. The open structure 201 has a vertical upright 201 M and a horizontal crosspiece 201 T, equipped with guides 211 along which a slide 213 runs carrying the double-rotating head indicated with 13. The toolhead may be produced according to any one of the previous embodiments.

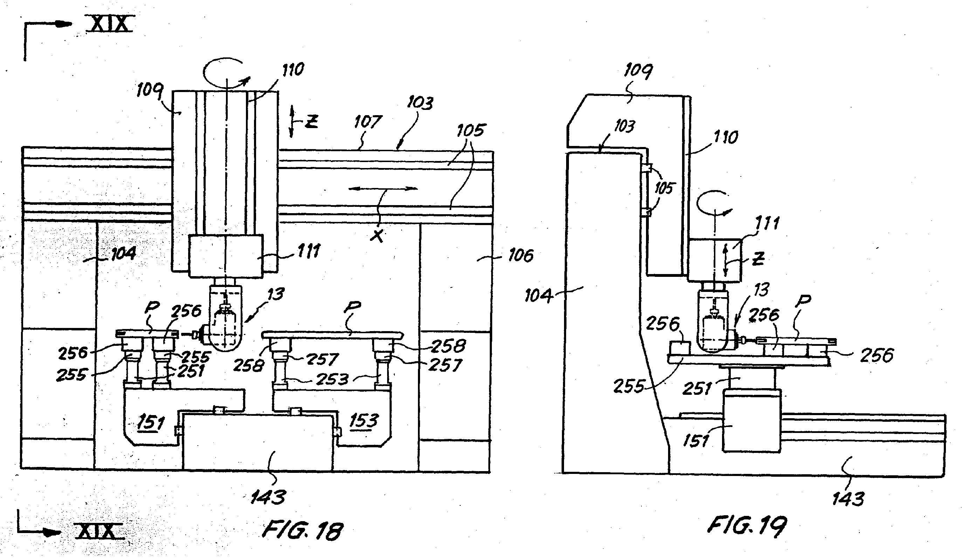

Figs. 18 and 19 show a front view and a side view of a machine with portal structure with a double-rotating toolhead with assemblies each comprising two chucks with axes positioned at 90° according to an L-shaped arrangement. In the two figures the toolhead is in different positions. The workpieces being machined P are carried by uprights 251, 253 carried by carriages or slides 151, 153. Positioned on the uprights 251, 253, which have variable distances between centers, are beams 255, 257, adjusted on which are blocks 256, 258 on which the workpieces being machined are clamped. Workpieces are clamped by suction, as the blocks are associated with suction means, also called suction cups. The clamping system with beams and blocks of this type is per se known and described for example in WO-A-9523047. The two figures 18 and 19 show the versatility of the system equipped with the toolhead according to the invention, which makes it possible to prevent collisions between tools and the machine structure or workpieces being machined, even with uprights 251, 253 of moderate height, or with blocks 256, 258 of limited height (so as not to knock against the beams 255, 257). In particular, to prevent knocks against the structural parts of the machine, it is sufficient for the height of the uprights to be at least half the diameter of the chucks. At the same time, the two numerically controlled axes B1, B2 makes it possible to provide a sufficient number of chucks to perform the entire machining cycle and in any case a number of chucks and tools corresponding to at least to the number available on a traditional head with four chucks in a cross arrangement.

It is to be understood that the drawing shows only a possible embodiment of the invention, which may vary in its forms and arrangements without however departing from the scope of the concept on which the invention is based. Any reference numbers in the attached claims do not limit the scope of protection whatsoever and are provided for the sole purpose of facilitating reading in the light of the preceding description and the attached drawings.

## Claims

1. A toolhead, comprising a plurality of chucks (23, 33) for corresponding machining tools (U), provided with a numerically controlled rotating or oscillating movement (B), **characterized in that** said chucks are divided into at least two assemblies (21, 31) of chucks (23, 33), movable independently from each other around a first and a second numerically controlled axis of rotation or oscillation (B1, B2) independent from each other.

2. Toolhead as claimed in claim 1, **characterized in that** both of said chuck assemblies rotate or oscillate around a third numerically controlled common axis of oscillation or rotation (C).

3. Toolhead as claimed in claim 1 or 2, **characterized in that** said first and said second numerically controlled axis (B1, B2) are substantially parallel with each other.

4. Toolhead as claimed in claim 3, **characterized in that** said first and said second numerically controlled axis (B1, B2) are geometrically coincident with each other.

5. Toolhead as claimed in claim 2 and 3 or 2 and 4, **characterized in that** said third numerically controlled common axis of rotation or oscillation (C) is positioned at 90° in relation to said first and second numerically controlled axis (B1, B2).

6. Toolhead as claimed in one or more of the previous claims, **characterized by** a support (15) on which said first and said second chuck assemblies are supported, oscillating or rotating around said first and second numerically controlled axis (B1, B2) in relation to said support (15).

7. Toolhead as claimed in claims 2 and 6, **characterized in that** said support (15) oscillates or rotates around said third numerically controlled common axis (C).

8. Toolhead as claimed in claim 6 or 7, **characterized in that** each of said two chuck assemblies is supported by a respective arm (17, 19) anchored to said support (15).

9. Toolhead as claimed in claim 8, **characterized in that** the distance between said supporting arms of the chuck assemblies is variable.

10. Toolhead as claimed in claim 9, **characterized in that** at least one of said arms is movable along guides (16) integral with said support (15).

11. Toolhead as claimed in claim 9 or 10, **characterized in that** the distance between said arms is adjustable in a direction parallel to at least one of said first and second numerically controlled axis of rotation or oscillation (B1, B2).

12. Toolhead as claimed in one or more of the previous claims, **characterized in that** at least a first of said two chuck assemblies has a number of chucks equal to or lower than three.

13. Toolhead as claimed in claim 12, **characterized in that** both chuck assemblies each have a number of chucks equal to or lower than three.

14. Toolhead as claimed in claim 12 or 13, **characterized in that** said chucks of said first and/or said second chuck assembly are arranged with their chuck axes forming an angle equal to or greater than approximately 180°.

15. Toolhead as claimed in one or more of the previous claims, **characterized in that** both chuck assemblies each have a number of chucks equal to or lower than three.

16. Toolhead as claimed in claim 12 or 14, **characterized in that** the first chuck assembly comprises three chucks and the second chuck assembly comprises four chucks.

17. Toolhead as claimed in claim 16, **characterized in that** the chucks of said first and second assembly are positioned with their chuck axes according to angles of 90° or 180°.

18. Toolhead as claimed in one or more of the previous claims, **characterized in that** at least one of said chuck assemblies comprises only two chucks positioned with their chuck axes positioned at 90°.

19. A machine tool comprising at least one toolhead, **characterized in that** said toolhead is produced according to one or more of the previous claims.

20. Machine tool as claimed in claim 19, **characterized in that** said toolhead is supported by a slide vertically movable along an upright (3; 109).

21. Machine tool as claimed in claim 19, **characterized in that** said toolhead is supported by a slide horizontally movable along a substantially horizontal crosspiece (107; 201T)

22. Machine tool as claimed in claim 21, **characterized in that** said crosspiece (107) forms part of a portal structure (104, 106, 107).

23. Machine tool as claimed in claim 21, **characterized in that** said crosspiece (201T) forms part of an open structure (210) movable along a horizontal bed (205).

24. Machine tool as claimed in claim 21, 22 or 23, **characterized in that** said slide is vertically movable, in a direction orthogonal to said crosspiece.

25. Machine tool as claimed in one or more of the claims 19 to 24, **characterized in that** it comprises three numerically controlled axes of translation (X, Y, Z) for the relative movement between said chucks and said workpieces (P).
